# FASCICULE DE BREVET EUROPEEN

(11) **EP 2 415 005 B1**
(45) Date de publication et mention de la délivrance du brevet: **01.03.2017**
(21) Numéro de dépôt: 10717678.6
(22) Date de dépôt: 30.03.2010
(51) Int. Cl.: G06Q 30/00, H04L 29/06

(54) **PROCÉDÉ DE GESTION DES DROITS D'AFFICHAGE DE CONTENUS MULTIMÉDIAS SUR UN TERMINAL COMPORTANT UN OU PLUSIEURS ÉCRANS**
VERFAHREN ZUR VERWALTUNG VON RECHTEN, MULTIMEDIAINHALTE AUF EINEM ENDGERÄT ANZUZEIGEN, DAS EINEN ODER MEHRERE BILDSCHIRME UMFASST
METHOD FOR MANAGING RIGHTS TO DISPLAY MULTIMEDIA CONTENTS ON A TERMINAL COMPRISING ONE OR MORE SCREENS

(30) Priorité: 31.03.2009 FR 0952024
(43) Date de publication de la demande: 08.02.2012
(73) Titulaire: Orange, 75015 Paris (FR)
(72) Inventeur: TERJAN, Mira, F-92120 Montrouge (FR); ISSAOUB ALLAH, Said, F-91550 Paray Vieille Poste (FR)
(74) Mandataire: Delumeau, François Guy
(86) Numéro de dépôt international: PCT/FR2010/050585
(87) Numéro de publication internationale: WO 2010/112755

(56) Documents cités:
- EP-A- 1 510 955
- WO-A-2009/005865

## Description

### Arrière-plan de l'invention

La présente invention se situe dans le domaine de la gestion de l'affichage des contenus multimédias reçus par un terminal.

Il est connu que les utilisateurs, de téléphone portable notamment, reçoivent de plus en plus fréquemment des contenus non désirés, par exemple des publicités, qui s'affichent sur l'écran de leur terminal.

Le document EP1510955 décrit un téléphone mobile comportant deux écrans sur des faces opposées et des moyens pour afficher une publicité sur l'un ou l'autre de ces écrans en fonction de l'application en cours d'exécution sur le téléphone portable.

Le document WO2009/005865 décrit un méthode permettant de communiquer des publicités de manière non-intrusive à l'utilisateur d'un téléphone mobile.

Nombreux sont les utilisateurs qui considèrent que ces publicités sont beaucoup trop intrusives.

### Objet et résumé de l'invention

La présente concerne un terminal qui ne présente pas cet inconvénient.

Selon un premier aspect, l'invention concerne un procédé de configuration d'un terminal comportant un ou plusieurs écrans, ce procédé comportant :
- une étape d'envoi d'un message de configuration destiné à un système de diffusion de contenus multimédias, ce message comportant au moins :
- un identifiant d'au moins un type de contenus multimédias ;
- un identifiant d'au moins un écran de ce terminal ; et
- un droit d'affichage définissant soit une autorisation soit une interdiction d'afficher un contenu multimédia sur cet écran en fonction du type de ce contenu.

Corrélativement, l'invention concerne un terminal comportant un ou plusieurs écrans, et des moyens pour envoyer un message de configuration destiné à un système de diffusion de contenus multimédias, ce message comportant au moins :
- un identifiant d'au moins un type de contenus multimédias ;
- un identifiant d'au moins un écran de ce terminal ; et
- un droit d'affichage définissant soit une autorisation soit une interdiction d'afficher un contenu multimédia sur cet écran en fonction du type de ce contenu.

L'invention s'applique en particulier aux terminaux comportant au moins deux écrans physiques.

Mais dans ce document, la notion d' « écran » doit être interprétée au sens large. Elle désigne toute entité physique ou logique, dans laquelle un contenu multimédia peut être affiché.

Par conséquent, l'invention s'applique aussi aux terminaux comportant un seul écran physique, et une ou plusieurs zones d'affichage distinctes pouvant être affichées simultanément (mécanisme de fenêtrage) ou non, comme dans le cas connu des écrans de veille.

Ainsi, et d'une façon générale, l'invention permet à un utilisateur de configurer son terminal pour décider quel type de contenu multimédia il souhaite recevoir sur chacun de ces écrans physiques ou logiques (fenêtre, fond d'écran, écran de veille, ...).

Dans l'invention, le droit d'affichage défini par un utilisateur vise une autorisation ou une interdiction d'afficher un contenu multimédia sur un écran.

Le droit peut viser un type de contenu particulier (information sportive, boursière, ...) mais aussi tout contenu.

En conséquence l'invention peut aussi être utilisée pour interdire tout affichage sur un écran particulier.

Le message de configuration contient donc des données (identifiant de type de contenu, identifiant d'écran et droit d'affichage) qui définissent une règle d'affichage de contenu, déterminant sur quel écran un contenu d'un type donné peut être affiché (autorisation) ou au contraire ne doit pas être affiché (interdiction).

Ce message de configuration est envoyé préalablement à un envoi ou à un affichage de contenu. Il constitue une règle d'affichage pour contraindre le choix de l'écran sur lequel un contenu donné sera affiché. Il peut être utilisé pour demander explicitement un contenu.

La règle d'affichage définit un droit d'affichage (autorisation ou interdiction) relativement à un ensemble d'au moins un type de contenu, identifié dans le message (identifiant d'au moins un type de contenu).

Dans un mode particulier de réalisation de l'invention, les identifiants d'écran, de contenu et les droits d'affichage sont obtenus à partir d'un profil d'un utilisateur du terminal.

Par conséquent l'invention vise aussi un fichier de configuration d'un terminal comportant au moins un écran, ce fichier comportant au moins :
- un identifiant d'au moins un type de contenus multimédias ;
- un identifiant d'au moins un écran de ce terminal ; et
- un droit d'affichage définissant soit une autorisation soit une interdiction d'afficher un contenu sur cet écran en fonction du type de ce contenu.

L'invention vise aussi un système de diffusion de contenus multimédias apte à sélectionner l'écran d'un terminal sur lequel un contenu doit être affiché, en fonction du type de contenu et de la configuration du terminal.

Par conséquent, l'invention vise aussi un procédé de gestion de la diffusion de contenus multimédias dans un réseau de télécommunication, ce procédé comportant :
- une étape de réception d'un message de configuration émis par un terminal, ce message comportant au moins :
   - un identifiant d'au moins un type de contenus multimédias ;
   - un identifiant d'au moins un écran de ce terminal ; et
   - un droit d'affichage définissant soit une autorisation soit une interdiction d'afficher un contenu sur cet écran en fonction du type de ce contenu ;
- une étape d'obtention d'un contenu multimédia ;
- une étape de détermination d'un type de ce contenu ; et éventuellement :
- une étape d'envoi d'un message de commande au terminal afin qu'il affiche ce contenu sur un écran sélectionné en fonction du droit d'affichage.

Corrélativement, l'invention concerne aussi un serveur de gestion de la diffusion de contenus multimédias dans un réseau de télécommunication comportant :
- des moyens de réception d'un message de configuration émis par un terminal, ce message comportant au moins :
   - un identifiant d'au moins un type de contenus multimédias ;
   - un identifiant d'au moins un écran de ce terminal ; et
   - un droit d'affichage définissant soit une autorisation soit une interdiction d'afficher un contenu sur cet écran en fonction du type de ce contenu ;
- des moyens d'obtention d'un contenu multimédia ;
- des moyens de détermination d'un type de ce contenu ; et
- des moyens pour envoyer un message de commande au terminal afin qu'il affiche ledit contenu sur un écran sélectionné en fonction de ce droit d'affichage.

Dans un mode particulier de mise en oeuvre, l'invention peut être utilisée pour configurer des droits d'affichage de publicités sur les différents écrans d'un terminal.

Plus particulièrement, dans un mode particulier de réalisation, les moyens du terminal selon l'invention pour envoyer le message de configuration comportent un module AdEngine tel que défini par le standard OMA Open Mobile Alliance.

Dans ce mode particulier de réalisation le serveur de gestion selon l'invention est un AdServer tel que défini par le standard OMA.

Dans un cas particulier de réalisation, les contenus multimédias sont émis par un serveur de diffusion de contenus multimédias, à destination d'un serveur de gestion selon l'invention, ce dernier demandant l'affichage du contenu sur l'écran d'un terminal en fonction des droits définis par l'utilisateur de ce terminal.

Selon cet aspect, l'invention concerne aussi un serveur de diffusion de contenus multimédias comportant des moyens pour envoyer un message de diffusion comportant au moins :
- un contenu multimédia ; et
- un identifiant d'un type d'écran de terminal sur lequel il souhaite que ledit contenu multimédia soit affiché.

Ainsi, le rôle du serveur de gestion de la diffusion consiste essentiellement à recevoir ce message de diffusion et à déterminer, pour un terminal donné, en fonction des droits définis par l'utilisateur de ce terminal, sur quel écran de ce terminal, le contenu multimédia peut être affiché.

Dans un mode particulier de réalisation du procédé de configuration selon l'invention, lequel ledit message de configuration comporte en outre une demande explicite pour recevoir du système de diffusion un contenu d'un type particulier.

Autrement dit, l'invention permet à un utilisateur de demander à recevoir un contenu multimédia d'un type particulier, par exemple une publicité sur l'écran de son choix.

Corrélativement, dans ce mode de réalisation, le procédé de gestion de la diffusion de contenus multimédias selon l'invention comporte une étape d'envoi d'un message à un serveur de diffusion de contenus multimédias pour qu'il lui envoie un contenu multimédia de ce type.

Dans tous les cas, il est important pour la mise en oeuvre de l'invention, que le serveur de gestion de la diffusion de contenus multimédias soit apte à déterminer le type d'un contenu devant être diffusé vers un terminal.

Dans un mode particulier de réalisation, le type d'un contenu à diffuser est compris dans le message de diffusion émis par le serveur de diffusion de contenus selon l'invention.

En variante, le serveur de gestion de la diffusion de contenus multimédias selon l'invention comporte des moyens pour identifier le type d'un contenu multimédia par exemple directement à partir du contenu, du nom du fichier, ou de l'identité du serveur de diffusion.

Dans un mode particulier de réalisation, les différentes étapes du procédé de configuration sont déterminées par des instructions de programmes d'ordinateurs.

En conséquence, l'invention vise aussi un programme d'ordinateur sur un support d'informations, ce programme étant susceptible d'être mis en oeuvre dans un terminal ou plus généralement dans un ordinateur, ce programme comportant des instructions adaptées à la mise en oeuvre des étapes d'un procédé de configuration tel que décrit ci-dessus.

Dans un mode particulier de réalisation, les différentes étapes du procédé de gestion de la diffusion de contenus multimédias sont déterminées par des instructions de programmes d'ordinateurs.

En conséquence, l'invention vise aussi un programme d'ordinateur sur un support d'informations, ce programme étant susceptible d'être mis en oeuvre dans un serveur de gestion de la diffusion de contenus multimédias ou plus généralement dans un ordinateur, ce programme comportant des instructions adaptées à la mise en oeuvre des étapes d'un procédé de configuration tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins et annexes en illustrent un exemple de réalisation dépourvu de tout caractère limitatif.

Sur les figures :
- la figure 1 représente un système comportant un terminal, un serveur de diffusion de contenus multimédias et un serveur de gestion de la diffusion de contenus multimédias conformes à l'invention ;
- la figure 2 représente un fichier de configuration conforme à l'invention ;
- la figure 3 représente, sous forme d'organigramme, les principales étapes d'un procédé de configuration conforme à un mode particulier de réalisation de l'invention ;
- la figure 4 représente, sous forme d'organigramme, les principales étapes d'un procédé de gestion de la diffusion de contenus multimédias conforme à un mode particulier de réalisation de l'invention ; et
- la figure 5 représente un exemple de messages échangés entre le terminal, et les serveurs de la figure 1..

Les annexes sont des exemples de messages pouvant être utilisés dans l'invention.

### Description détaillée d'un mode de réalisation

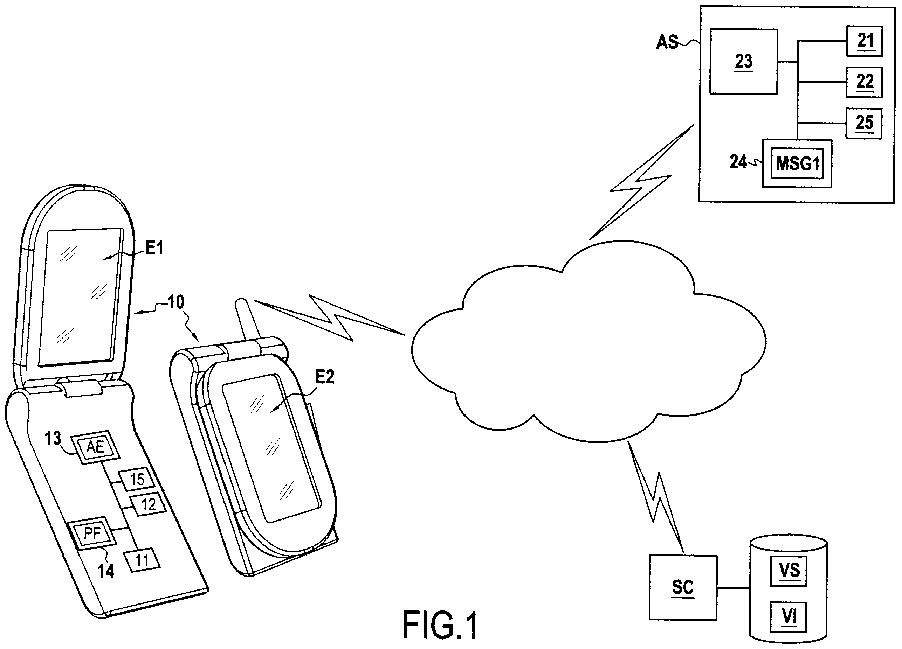

La **figure 1** représente un système comportant un terminal 10, un serveur SC de diffusion de contenus multimédias et un serveur AS de gestion de la diffusion de contenus multimédias conformes à l'invention.

Dans l'exemple de réalisation décrit ici, le terminal 10 est un téléphone mobile comportant deux écrans E1 et E2.

Nous supposerons que l'identifiant de ce terminal dans le réseau est ID_10 (par exemple son numéro MISDN).

Ce terminal 10 a l'architecture conventionnelle d'un téléphone portable. Il comporte un processeur 11, une mémoire vive de type RAM 12, une mémoire morte de type ROM 13, et une mémoire non volatile réinscriptible EEPROM 14.

Dans le mode de réalisation décrit ici, la mémoire morte 13 comporte un module logiciel AE apte à mettre en oeuvre les fonctions d'un agent AdEngine tel que défini par le standard OMA (Open Mobile Alliance).

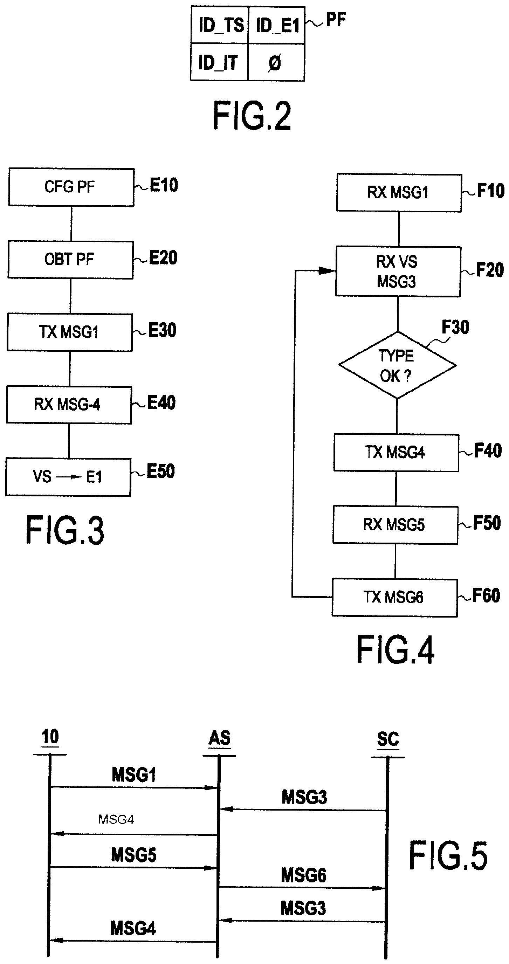

Cet agent AdEngine comporte des fonctions supplémentaires conformes à l'invention et qui seront décrites en référence à la figure 3.

Le terminal 10 peut être configuré par l'utilisateur pour lui permettre de choisir quel type de publicités il accepte de recevoir sur chacun des écrans E1, E2.

Dans le mode de réalisation décrit ici, ces configurations sont enregistrées dans un fichier de profil utilisateur PF stocké dans l'EEPROM 14.

Ce fichier de profil est représenté à la **figure 2****.** Il définit dans cet exemple que :
- les publicités sur le sport, de type ID_TS peuvent être affichées sur l'écran E1 identifié par ID_E1 ; et que ;
- les informations sur la technologie, de type ID_IT, ne peuvent être affichées ni sur l'écran E1, ni sur l'écran E2.

Nous supposerons dans cet exemple que le serveur SC de diffusion comporte une base de données de contenus comportant :
- une vidéo VS pour une publicité sportive, c'est-à-dire de type IS_TS ; et
- une vidéo VI d'information générale.

Dans le mode de réalisation décrit ici, le serveur AS de gestion de la diffusion de contenus est apte à mettre en oeuvre les fonctions d'un agent AdServer tel que défini par le standard OMA (Open Mobile Alliance).

Il a l'architecture générale d'un ordinateur et comporte notamment un processeur 21, une mémoire vive de type RAM 22, une mémoire morte de type ROM 23, et une mémoire non volatile réinscriptible EEPROM 24 dans lequel il peut stocker des messages de configuration MSG1, MSG5 reçus du terminal 10.

La mémoire ROM 23 constitue un support d'enregistrement lisible conforme à l'invention. Elle comporte un programme d'ordinateur comprenant des instructions pour l'exécution des étapes d'un procédé de gestion de la diffusion de contenu conforme à l'invention, ces étapes étant représentées sous forme d'organigramme à la figure 4.

En référence aux **figures 3 à 5****,** nous allons maintenant décrire un exemple de mise en oeuvre de l'invention :
- la figure 3 représente les étapes E10 à E50 mises en oeuvre par le terminal 10 ;
- la figure 4 représente les étapes F10 à F60 mises en oeuvre par le serveur de gestion de diffusion AS ; et
- la figure 5 représente les messages échangés entre les équipements 10, AS et SC de la figure 1.

Nous supposerons dans cet exemple que l'utilisateur configure son terminal 10 au cours d'une étape E10, cette étape consistant essentiellement à enregistrer des informations dans son profil PF pour définit des droits d'affichage de contenus multimédias, en fonction de leur type, sur chacun des écrans E1, E2.

Dans l'exemple décrit ici, ces droits sont :
- autorisation d'affichage de contenus de type sport ID_TS sur l'écran E1 d'identifiant ID_E1 ;
- interdiction d'afficher des contenus sur la technologie de type ID_IT sur E1 et E2.

Dans le mode de réalisation décrit ici, le profil peut aussi associer la valeur « ALL » à un type de contenu particulier si ces contenus peuvent être affichés sur tous les écrans d'un terminal.

Dans l'exemple de réalisation décrit ici, le terminal 10 comporte un menu utilisable par l'utilisateur pour activer sa configuration auprès du serveur AS de gestion de la diffusion de contenus.

Dans l'exemple de réalisation décrit ici, lorsque l'utilisateur utilise ce menu, le module AdEngine lit les données de configuration dans le profil PF (étape E20) et envoie un message de configuration MSG1 à l'AdServer AS (étape E30), ce message de configuration MSG1 définissant les droits d'affichage que l'utilisateur a enregistré dans son profil PF.

Un exemple de message de configuration MSG1 est proposé à l'annexe 1. Dans ce message:
- l'identifiant de type de contenu ID_TS est associé à l'identifiant d'écran ID_E1 pour signifier que l'affichage de contenus de type ID_TS est autorisé sur l'écran ID_E1;
- l'identifiant de type de contenu ID_IT est associé à l'identifiant "empty" pour signifier que l'affichage de contenus de type ID_IT n'est autorisé sur aucun écran.

Le message MSG1 comporte un champ « OnDemand=No » pour signifier que le message MSG1 ne constitue pas une demande explicite de contenu, mais uniquement un message de configuration.

Ce message de configuration MSG1 est reçu par le serveur de gestion de diffusion de contenus au cours d'une étape F10.

Nous supposerons maintenant que le serveur SC de diffusion de contenus souhaite diffuser une vidéo VS « publicitéOrangeSport.mp3 » de type sport ID_TS, à destination du terminal 10.

Dans le mode de réalisation décrit ici, le serveur de diffusion envoie alors, au cours d'une étape F20, un message de diffusion MSG3 à destination du serveur AS de gestion de diffusion de contenus, ce message comportant :
- la vidéo VS OrangeSport.mp3; et
- l'identifiant ALL d'un type d'écran de terminal sur lequel ce contenu peut être affiché.

Un exemple de message de diffusion MSG3 est donné à l'Annexe 2.

Dans l'exemple de réalisation décrit ici, cette vidéo peut être affichée sur tout type d'écran (identifiant ALL).

Le message de diffusion MSG3 est reçu par le serveur AdServer AS au cours d'une étape F20.

Au cours d'une étape F30 le serveur AdServer AS détermine le type IS_TS de la vidéo VS OrangeSport.mp3 et en déduit que cette vidéo peut être affichée sur l'écran E1 du terminal 10.

Dans le mode de réalisation décrit ici, le serveur AdServer AS détermine le type du contenu par analyse de cette vidéo.

Par conséquent, le serveur AdServer envoie, au cours d'une étape F40, un message de commande MSG4 au terminal 10 afin qu'il affiche cette vidéo VS sur l'écran E1.

Un exemple de message de commande MSG4 est donné à l'annexe 3.

Le message de diffusion MSG4 est reçu par le terminal 10 au cours d'une étape E40.

La vidéo VS OrangeSport.mp3 est affichée sur l'écran E1 par l'agent AdEngine au cours d'une étape E50.

Dans le mode de réalisation décrit ici, le terminal 10 peut aussi demander explicitement à recevoir un contenu d'un type particulier.

L'annexe 4 comporte donne un exemple de message de configuration MSG5 pouvant être utilisé à cet effet. Il comporte un champ « OnDemand=Yes » représentatif de cette demande explicite.

Dans l'exemple de l'annexe 4, le message MSG5 est utilisé pour demander l'envoi explicite d'une publicité sportive (type ID_TS) sur un économiseur d'écran (SCREEN ID_EE).

Lorsque le serveur AdServer AS reçoit un tel message de configuration MSG5 (étape F50) il le transmet immédiatement au serveur de contenu SC (étape F60).

Puis le serveur AdServer AS retourne à l'étape F20 où il attend du serveur de diffusion de contenus SC un message de diffusion MSG3 d'un contenu. Puis les étapes F30 et F40 sont à nouveau exécutées par le serveur AdServer AS, le terminal recevant à l'étape E40 un contenu du type demandé et affichant ce contenu à l'étape E50.

Une manière de définir un droit d'affichage (autorisation ou interdiction) relativement à un ensemble d'au moins un type de contenu, identifié dans un message de configuration (identifiant d'au moins un type de contenu) a été décrite ci-dessus.

Toute autre logique de définition de droit d'affichage à partir de ces mêmes données est bien entendu envisageable. Au lieu, comme décrit ci-dessus, d'associer un identifiant de type de contenu à un identifiant d'écran sur lequel l'affichage d'un contenu dudit type est autorisé, il est possible d'insérer dans le message une information, représentative d'une autorisation ou d'une interdiction.

Le droit d'affichage spécifie par exemple si l'affichage des contenus dont le type fait partie de cet ensemble est autorisé ou interdit pour un écran donné. Ou bien, au contraire, si l'affichage des contenus dont le type ne fait pas partie de cet ensemble est autorisé ou interdit. Ou bien encore, que l'affichage des contenus d'un premier type est autorisé, sauf si ce contenu est aussi d'un deuxième type pour lequel affichage est interdit.

Il est également possible de combiner logiquement (par "ET" logique ou "OU" logique) les conditions sur le type de contenu dont l'affichage est autorisé ou interdit: pour exprimer par exemple que, si le type du contenu à afficher est égal à un premier type "OU" égal à un deuxième type "ET" différent d'un troisième type, alors l'affichage sur l'écran concerné est autorisé.

### ANNEXE 1

```
 <mobad:PushAd xmlns:mobad="urn:oma:bac:dlmobad:mobad-1.0"
 xmlns:xsi="http://www.w3.org/2001/XMLSchema-instance">
 <version>1.0</version>
 <nonce>32efd34de39sdwefqwed</nonce>
 <OnDemand>No</OnDemand>
 <UserProf>
  <AdType>ID_TS</AdType>
  <Screen>ID_E1</Screen>
  </UserProf>
  <UserProf>
  <AdType>ID_IT</AdType>
  <Screen>empty</Screen>
  </UserProf>
  </mobad: PushAdGateway>
```

### ANNEXE 2

```
 <mobad:PushAd xmlns:mobad="urn:oma:bac:dlmobad:mobad-1.0"
 xmlns:xsi="http://www.w3.org/2001/XMLSchema-instance">
 <version>1.0</version>
 <nonce>32efd34de39sdwefqwer</nonce>
 <AdvertiserId>123456</AdvertiserId>
 <Advertisement>
    <AdContent>publicitéOrangeSport.mp3</AdContent>
 </Advertisement>
 <AdType>ID_TS</AdType>
 <TargetUserID>
     <MSISDN>ID_10</MSISDN>
 </TargetUserID>
 <AdDisplayRules>
      <Screen>ALL</Screen>
 </AdDisplayRules>
 </mobad: PushAdGateway>
```

### ANNEXE 3

```
 <mobad:PushAd xmlns:mobad="urn:oma:bac:dlmobad:mobad-1.0"
 xmlns:xsi="http://www.w3.org/2001/XMLSchema-instance">
 <version> 1.0</version>
 <nonce>32efd34de39sdwefqwea</nonce>
 <Advertisement>
    <AdContent>publicitéOrangeSport.mp3</AdContent>
 </Advertisement>
 <AdType>ID_TS</AdType>
 <TargetUserID>
    <MSISDN>ID_10</MSISDN>
 </TargetUserID>
 <AdDisplayRules>
    <Screen>ID_E1</Screen>
    </AdDisplayRules>
    </mobad: PushAdGateway>
```

### ANNEXE 4

```
 <mobad:PushAd xmlns:mobad="urn:oma:bac:dlmobad:mobad-1.0"
 xmlns:xsi="http://www.w3.org/2001/XMLSchema-instance">
 <version>1.0</version>
 <nonce>32efd34de39sdwefqwed</nonce>
 <OnDemand>Yes</OnDemand>
 <TargetUserID>
    <MSISDN>ID_10</MSISDN>
    </TargetUserID>
    <UserProf>
  <AdType>ID_TS</AdType>
  <Screen>ID_EE</Screen>
  </UserProf>
  </mobad: PushAdGateway>
```

## Revendications

1. Procédé de configuration d'un terminal (10) comportant au moins un écran (E1, E2), **caractérisé en ce qu'**il comporte une étape (E30) d'envoi d'un message (MSG1, MSG5) de configuration destiné à un système (AS, SC) de diffusion de contenus multimédias, ce message (MSG1, MSG5) comportant au moins :
- un identifiant (ID_TS, ID_ALL) d'au moins un type (TS, ALL) de contenus multimédias ;
- un identifiant (ID_E1) d'au moins un (E1) desdits écrans (E1, E2) ; et
- un droit d'affichage, définissant soit une autorisation soit une interdiction d'afficher un contenu (VS) sur ledit au moins écran (E1) en fonction du type (TS) de ce contenu (VS).

2. Procédé de configuration selon la revendication 1, dans lequel ledit message de configuration (MSG5) comporte en outre une demande explicite pour recevoir dudit système de diffusion (AS, SC) un contenu (VS) dudit type (TS).

3. Procédé de configuration selon la revendication 1 ou 2, **caractérisé en ce qu'**il comporte une étape (E20) d'obtention desdits identifiants (ID_TS, ID_E1) et dudit droit à partir d'un profil (PF) utilisateur dudit terminal (10).

4. Fichier de configuration d'un terminal (10) comportant au moins un écran (E1, E2) **caractérisé en ce qu'**il comporte au moins :
- un identifiant (ID_TS, ID_ALL) d'au moins un type (TS, ALL) de contenus multimédias ;
- un identifiant (ID_E1) d'au moins un (E1) desdits écrans (E1, E2) ; et
- un droit d'affichage définissant soit une autorisation soit une interdiction d'afficher un contenu (VS) sur ledit au moins écran (E1) en fonction du type (TS) de ce contenu (VS).

5. Terminal (10) comportant aux moins un écran (E1, E2), et des moyens (AE, 15) pour envoyer un message (MSG1, MSG5) de configuration destiné à un système (AS, SC) de diffusion de contenus multimédias, ce message (MSG1, MSG5) comportant au moins :
- un identifiant (ID_TS, ID_ALL) d'au moins un type (TS, ALL) de contenus multimédias ;
- un identifiant (ID_E1) d'au moins un (E1) desdits écrans (E1, E2) ; et
- un droit d'affichage définissant soit une autorisation soit une interdiction d'afficher un contenu (VS) sur ledit au moins écran (E1) en fonction du type (TS) de ce contenu (VS).

6. Terminal (10) selon la revendication 5, **caractérisé en ce que** lesdits moyens (AE, 15) d'envoi de message comportent un module AdEngine (AE) tel que définie par le standard OMA (Open Mobile Alliance).

7. Support d'enregistrement (13) lisible par un ordinateur (10) sur lequel est enregistré un programme d'ordinateur (AE) comprenant des instructions pour l'exécution des étapes du procédé de configuration selon l'une quelconque des revendications 1 à 3.

8. Serveur (SC) de diffusion de contenus multimédias **caractérisé en ce qu'**il comporte des moyens pour envoyer un message de diffusion (MSG3) comportant au moins :
- un contenu multimédia (VS) ; et
- un identifiant (ID_EE) d'un type d'écran (EE) de terminal sur lequel il souhaite que ledit contenu multimédia (VS) soit affiché.

9. Procédé de gestion de la diffusion de contenus multimédias dans un réseau de télécommunication comportant :
- une étape (F10) de réception d'un message (MSG1, MSG5) de configuration émis par un terminal (10), ce message (MSG1) comportant au moins :
- un identifiant (ID_TS, ID_ALL) d'au moins un type (TS, ALL) de contenus multimédias ;
- un identifiant (ID_E1) d'au moins un écran (E1) de ce terminal (10) ; et
- un droit d'affichage définissant soit une autorisation soit une interdiction d'afficher un contenu (VS) sur ledit au moins écran (E1) en fonction du type (TS) de ce contenu (VS) ;
- une étape (F40) d'envoi d'un message de commande (MSG4) audit terminal (10) afin qu'il affiche un contenu (VS) sur un écran (E1) sélectionné en fonction dudit droit d'affichage.

10. Procédé de gestion selon la revendication 9 comprenant :
- une étape (F20) d'obtention d'un contenu multimédia (VS) ;
- une étape (F30) de détermination d'un type (ID_TS) dudit contenu (VS) et d'identification, en fonction du type dudit contenu et dudit droit d'affichage, d'un écran sur lequel ledit contenu est destiné à être affiché.

11. Procédé selon la revendication 9 ou 10, **caractérisé en ce qu'**il comporte une étape (F20) de réception d'un message de diffusion (MSG3) comportant ledit contenu (VS) et le type (ID_TS) de ce contenu.

12. Serveur (AS) de gestion de la diffusion de contenus multimédias (VS) dans un réseau de télécommunication comportant :
- des moyens (25) de réception d'un message de configuration (MSG1, MSG5) émis par un terminal (10), ce message comportant au moins :
- un identifiant (ID_TS, ID_ALL) d'au moins un type (TS, ALL) de contenus multimédias ;
- un identifiant (ID_E1) d'au moins un écran (E1) de ce terminal (10) ; et
- un droit d'affichage définissant soit une autorisation soit une interdiction d'afficher un contenu (VS) sur ledit au moins écran (E1) en fonction du type (TS) de ce contenu (VS) ;
- des moyens (25) d'obtention d'un contenu multimédia (VS) ;
- des moyens (21) de détermination d'un type (ID_TS) dudit contenu (VS) ; et
- des moyens (25) pour envoyer un message de commande (MSG4) audit terminal (10) afin qu'il affiche ledit contenu (VS) un écran (E1) sélectionné en fonction dudit droit d'affichage.

13. Serveur selon la revendication 12, **caractérisé en ce que** ce serveur (AS) est un AdServer tel que défini par le standard OMA (Open Mobile Alliance).

14. Support d'enregistrement (23) lisible par un ordinateur sur lequel est enregistré un programme d'ordinateur comprenant des instructions pour l'exécution des étapes du procédé de gestion de la diffusion de contenu selon l'une quelconque des revendications 9 à 11.

## Patentansprüche

1. Verfahren zur Konfiguration eines mindestens einen Bildschirm (E1, E2) aufweisenden Endgeräts (10), **dadurch gekennzeichnet, dass** es einen Schritt (E30) des Sendens einer Konfigurationsmitteilung (MSG1, MSG5) aufweist, die für ein System (AS, SC) zur Verbreitung von Multimediainhalten bestimmt ist, wobei diese Mitteilung (MSG1, MSG5) mindestens aufweist:
- eine Kennung (ID_TS, ID_ALL) mindestens eines Typs (TS, ALL) von Multimediainhalten;
- eine Kennung (ID_E1) mindestens eines (E1) der Bildschirme (E1, E2); und
- ein Anzeigerecht, das entweder eine Erlaubnis oder ein Verbot der Anzeige eines Inhalts (VS) auf dem mindestens einen Bildschirm (E1) abhängig vom Typ (TS) dieses Inhalts (VS) definiert.

2. Konfigurationsverfahren nach Anspruch 1, wobei die Konfigurationsmitteilung (MSG5) außerdem eine ausdrückliche Anforderung aufweist, um vom Verbreitungssystem (AS, SC) einen Inhalt (VS) des Typs (TS) zu empfangen.

3. Konfigurationsverfahren nach Anspruch 1 oder 2, **dadurch gekennzeichnet, dass** es einen Schritt (E20) des Erhalts der Kennungen (ID_TS, ID_E1) und des Rechts ausgehend von einem Benutzerprofil (PF) des Endgeräts (10) aufweist.

4. Konfigurationsdatei eines Endgeräts (10), das mindestens einen Bildschirm (E1, E2) aufweist, **dadurch gekennzeichnet, dass** sie mindestens aufweist:
- eine Kennung (ID_TS, ID_ALL) mindestens eines Typs (TS, ALL) von Multimediainhalten;
- eine Kennung (ID_E1) mindestens eines (E1) der Bildschirme (E1, E2); und
- ein Anzeigerecht, das entweder eine Erlaubnis oder ein Verbot der Anzeige eines Inhalts (VS) auf dem mindestens einen Bildschirm (E1) abhängig vom Typ (TS) dieses Inhalts (VS) definiert.

5. Endgerät (10), das mindestens einen Bildschirm (E1, E2) und Einrichtungen (AE, 15) aufweist, um eine Konfigurationsmitteilung (MSG1, MSG5) zu senden, die für ein System (AS, SC) zur Verbreitung von Multimediainhalten bestimmt ist, wobei diese Mitteilung (MSG1, MSG5) mindestens aufweist:
- eine Kennung (ID_TS, ID_ALL) mindestens eines Typs (TS, ALL) von Multimediainhalten;
- eine Kennung (ID_E1) mindestens eines (E1) der Bildschirme (E1, E2); und
- ein Anzeigerecht, das entweder eine Erlaubnis oder ein Verbot der Anzeige eines Inhalts (VS) auf dem mindestens einen Bildschirm (E1) abhängig vom Typ (TS) dieses Inhalts (VS) definiert.

6. Endgerät (10) nach Anspruch 5, **dadurch gekennzeichnet, dass** die Einrichtungen (AE, 15) zum Senden einer Mitteilung ein AdEngine-Modul (AE) wie durch den OMA-Standard (Open Mobile Alliance) definiert aufweisen.

7. Aufzeichnungsträger (13), der von einem Computer (10) lesbar ist, auf dem ein Computerprogramm (AE) aufgezeichnet ist, das Anweisungen zur Ausführung der Schritte des Konfigurationsverfahrens nach einem der Ansprüche 1 bis 3 enthält.

8. Server (SC) zur Verbreitung von Multimediainhalten, **dadurch gekennzeichnet, dass** er Einrichtungen aufweist, um eine Verbreitungsmitteilung (MSG3) zu senden, die mindestens aufweist:
- einen Multimediainhalt (VS); und
- eine Kennung (ID_EE) eines Bildschirmtyps (EE) des Endgeräts, auf dem er möchte, dass der Multimediainhalt (VS) angezeigt wird.

9. Verfahren zur Verwaltung der Verbreitung von Multimediainhalten in einem Telekommunikationsnetz, das aufweist:
- einen Schritt (F10) des Empfangs einer von einem Endgerät (10) gesendeten Konfigurationsmitteilung (MSG1, MSG5), wobei diese Mitteilung (MSG1) mindestens aufweist:
- eine Kennung (ID_TS, ID_ALL) mindestens eines Typs (TS, ALL) von Multimediainhalten;
- eine Kennung (ID_E1) mindestens eines Bildschirms (E1) dieses Endgeräts (10); und
- ein Anzeigerecht, das entweder eine Erlaubnis oder ein Verbot der Anzeige eines Inhalts (VS) auf dem mindestens einen Bildschirm (E1) abhängig vom Typ (TS) dieses Inhalts (VS) definiert;
- einen Schritt (F40) des Sendens einer Befehlsmitteilung (MSG4) an das Endgerät (10), damit es einen Inhalt (VS) auf einem Bildschirm (E1) anzeigt, der abhängig vom Anzeigerecht ausgewählt wird.

10. Verwaltungsverfahren nach Anspruch 9, das enthält:
- einen Schritt (F20) des Erhalts eines Multimediainhalts (VS);
- einen Schritt (F30) der Bestimmung eines Typs (ID_TS) des Inhalts (VS) und der Identifikation, abhängig vom Typ des Inhalts und vom Anzeigerecht, eines Bildschirms, auf dem der Inhalt angezeigt werden soll.

11. Verfahren nach Anspruch 9 oder 10, **dadurch gekennzeichnet, dass** es einen Schritt (F20) des Empfangs einer Verbreitungsmitteilung (MSG3) aufweist, die den Inhalt (VS) und den Typ (ID_TS) dieses Inhalts aufweist.

12. Server (AS) zur Verwaltung der Verbreitung von Multimediainhalten (VS) in einem Telekommunikationsnetz, der aufweist:
- Einrichtungen (25) zum Empfang einer von einem Endgerät (10) gesendeten Konfigurationsmitteilung (MSG1, MSG5), wobei diese Mitteilung mindestens aufweist:
- eine Kennung (ID_TS, ID_ALL) mindestens eines Typs (TS, ALL) von Multimediainhalten;
- eine Kennung (ID_E1) mindestens eines Bildschirms (E1) dieses Endgeräts (10); und
- ein Anzeigerecht, das entweder eine Erlaubnis oder ein Verbot der Anzeige eines Inhalts (VS) auf dem mindestens einen Bildschirm (E1) abhängig vom Typ (TS) dieses Inhalts (VS) definiert;
- Einrichtungen (25) zum Erhalt eines Multimediainhalts (VS);
- Einrichtungen (21) zur Bestimmung eines Typs (ID_TS) des Inhalts (VS); und
- Einrichtungen (25), um eine Befehlsmitteilung (MSG4) an das Endgerät (10) zu senden, damit es den Inhalt (VS) auf einem Bildschirm (E1) anzeigt, der abhängig vom Anzeigerecht ausgewählt wurde.

13. Server nach Anspruch 12, **dadurch gekennzeichnet, dass** dieser Server (AS) ein AdServer wie durch den OMA-Standard (Open Mobile Alliance) definiert ist.

14. Computerlesbarer Aufzeichnungsträger (23), auf dem ein Computerprogramm aufgezeichnet ist, das Anweisungen zur Ausführung der Schritte des Verwaltungsverfahrens der Inhaltsverbreitung nach einem der Ansprüche 9 bis 11 enthält.

## Claims

1. Method for configuring a terminal (10) having at least one screen (E1, E2), **characterized in that** it has a step (E30) of sending a configuration message (MSG1, MSG5) intended for a system (AS, SC) for broadcasting multimedia content, this message (MSG1, MSG5) having at least:
- an identifier (ID-TS, ID_ALL) for at least one type (TS, ALL) of multimedia content;
- an identifier (ID_E1) for at least one (E1) of said screens (E1, E2); and
- a display right, defining either an authorization or a prohibition to display a content (VS) on said at least one screen (E1) on the basis of the type (TS) of this content (VS).

2. Configuration method according to Claim 1, in which said configuration message (MSG5) moreover has an explicit request to receive a content (VS) of said type (TS) from said broadcasting system (AS, SC).

3. Configuration method according to Claim 1 or 2, **characterized in that** it has a step (E20) of obtaining said identifiers (ID-TS, ID_E1) and said right from a user profile (PF) of said terminal (10).

4. File for configuring a terminal (10) having at least one screen (E1, E2), **characterized in that** it has at least:
- an identifier (ID_TS, ID_ALL) for at least one type (TS, ALL) of multimedia content;
- an identifier (ID_E1) for at least one (E1) of said screens (E1, E2); and
- a display right defining either an authorization or a prohibition to display a content (VS) on said at least one screen (E1) on the basis of the type (TS) of this content (VS).

5. Terminal (10) having at least one screen (E1, E2), and means (AE, 15) for sending a configuration message (MSG1, MSG5) intended for a system (AS, SC) for broadcasting multimedia content, this message (MSG1, MSG5) having at least:
- an identifier (ID_TS, ID_ALL) for at least one type (TS, ALL) of multimedia content;
- an identifier (ID_E1) for at least one (E1) of said screens (E1, E1); and
- a display right defining either an authorization or a prohibition to display a content (VS) on said at least one screen (E1) on the basis of the type (TS) of this content (VS).

6. Terminal (10) according to Claim 5, **characterized in that** said means (AE, 15) for sending a message have an AdEngine module (AE) as defined by the OMA (Open Mobile Alliance) standard.

7. Recording medium (13) readable by a computer (10) on which is recorded a computer program (AE) comprising instructions for executing the steps of the configuration method according to any one of claims 1 to 3.

8. Server (SC) for broadcasting multimedia content, **characterized in that** it has means for sending a broadcast message (MSG3) having at least:
- a multimedia content (VS); and
- an identifier (ID_EE) for a type of terminal screen (EE) on which it wishes said multimedia content (VS) to be displayed.

9. Method for managing the broadcast of multimedia content in a telecommunications network, having:
- a step (F10) of receiving a configuration message (MSG1, MSG5) sent by a terminal (10), this message (MSG1) having at least:
- an identifier (ID_TS, ID_ALL) for at least one type (TS, ALL) of multimedia content;
- an identifier (ID_E1) for at least one screen (E1) of this terminal (10); and
- a display right defining either an authorization or a prohibition to display a content (VS) on said at least one screen (E1) on the basis of the type (TS) of this content (VS) ;
- a step (F40) of sending a control message (MSG4) to said terminal (10) so that it displays a content (VS) on a screen (E1) selected on the basis of said display right.

10. Management method according to Claim 9, comprising:
- a step (F20) of obtaining a multimedia content (VS);
- a step (F30) of determining a type (ID_TS) of said content (VS) and of identifying, on the basis of the type of said content and of said display right, a screen on which said content is intended to be displayed.

11. Method according to Claim 9 or 10, **characterized in that** it has a step (F20) of receiving a broadcast message (MSG3) having said content (VS) and the type (ID_TS) of this content.

12. Server (AS) for managing the broadcast of multimedia content (VS) in a telecommunications network, having:
- means (25) for receiving a configuration message (MSG1, MSG5) sent by a terminal (10), this message having at least:
- an identifier (ID_TS, ID_ALL) for at least one type (TS, ALL) of multimedia content;
- an identifier (ID_E1) for at least one screen (E1) of this terminal (10); and
- a display right defining either an authorization or a prohibition to display a content (VS) on said at least one screen (E1) on the basis of the type (TS) of this content (VS);
- means (25) for obtaining a multimedia content (VS) ;
- means (21) for determining a type (ID_TS) of said content (VS); and
- means (25) for sending a control message (MSG4) to said terminal (10) so that it displays said content (VS) on a screen (E1) selected on the basis of said display right.

13. Server according to Claim 12, **characterized in that** this server (AS) is an AdServer as defined by the OMA (Open Mobile Alliance) standard.

14. Recording medium (23) readable by a computer on which is recorded a computer program comprising instructions for executing the steps of the method for managing the broadcast of content according to any one of Claims 9 to 11.
